# EUROPEAN PATENT APPLICATION

(11) **EP 4 456 286 A1**
(43) Date of publication of application: **30.10.2024**
(21) Application number: 24169250.8
(22) Date of filing: 09.04.2024
(51) Int. Cl.: H01M 50/204, H01M 50/30, H01M 50/342, H01M 50/367, H01M 50/383

(54) **BATTERY PACK**

(30) Priority: 13.04.2023 CN 202310398422
(71) Applicant: Huizhou Eve Power Co., Ltd, Tonghu Town, Zhongkai High-tech District Huizhou, Guangdong 516039 (CN); Eve Energy Co., Ltd., Huizhou, Guangdong 516006 (CN)
(72) Inventor: HUANG, Weicai, Guangdong, 516006 (CN)
(74) Representative: Murgitroyd & Company

(57) **Abstract**

A battery pack is provided, including a housing and a battery module. The housing includes a bottom plate and a side wall plate connected to peripheral sides of the bottom plate, wherein the bottom plate and the side wall plate are enclosed to form an accommodating cavity, and a surface of the bottom plate which faces towards the accommodating cavity forms a plurality of first grooves independently arranged. The battery module is located at the accommodating cavity, wherein the battery module includes a plurality of sub-modules, a pressure relief cavity is provided between a bottom surface of each of the plurality of sub-modules and a corresponding one of the plurality of first grooves, the sub-modules each include battery cells, bottom surfaces of the battery cells are provided with respective pressure relief valves, and openings of the pressure relief valves communicate with the pressure relief cavity.

## Description

### TECHNICAL FIELD

The present application relates to the field of battery technologies, and more particularly, to a battery pack.

### BACKGROUND

In the related art, when one battery cell in the battery pack occurs thermal runaway, a pressure relief valve at the bottom of the battery cell under the thermal runaway condition emits a combustible gas and a flame. Since the bottom portions of all the battery cells in the conventional battery pack communicate together, a chain thermal runaway of the other battery cells is caused, thereby causing a fire in the entire battery pack.

### SUMMARY

According to embodiments of the present application, it is provided a battery pack that can improve the technical problem of occurring thermal runaway in a single one battery cell of the battery pack to result in the chain thermal runaway.

According to embodiments of the present application, it is provided a battery pack, including:
a housing including a bottom plate and a side wall plate connected to peripheral sides of the bottom plate, in which the bottom plate and the side wall plate are enclosed to form an accommodating cavity, and a surface of the bottom plate which faces towards the accommodating cavity forms a plurality of first grooves independently arranged; and
a battery module located at the accommodating cavity, in which the battery module includes a plurality of sub-modules, a pressure relief cavity is provided between a bottom surface of each of the plurality of sub-modules and a corresponding one of the plurality of first grooves, the sub-modules each include battery cells, bottom surfaces of the battery cells are provided with respective pressure relief valves, and openings of the pressure relief valves communicate with the pressure relief cavity.

In some embodiments, the battery pack further includes a sealing plate disposed in the accommodating cavity, wherein the sealing plate is located between the bottom surface of each of the plurality of sub-modules and the bottom plate, and the sealing plate covers notches of the plurality of the first grooves;
the sealing plate is provided with a plurality of through holes each corresponding to a respective one of the openings of the pressure relief valves of the battery cells, and the plurality of through holes extends through the sealing plate.

In some embodiments, the surface of the bottom plate which faces towards the accommodating cavity is further provided with a second groove, a first pressure relief channel is provided between the sealing plate and the second groove, walls of the first grooves which are adjacent to the second groove are each provided with a first gap, and the first pressure relief channel communicates with the pressure relief cavity through the first gap.

In some embodiments, the plurality of the first grooves are arranged at intervals in a same direction, and the second groove is located at same end portions of the plurality of the first grooves.

In some embodiments, the bottom plate is provided with at least one rib at a bottom of each of the first grooves, an end face of the at least one rib which is away from the bottom of the first groove abuts against the sealing plate, the at least one rib devides the pressure relief cavity to form a plurality of pressure relief sub-cavities, and the pressure relief sub-cavities communicate with the first pressure relief channel;
the sub-modules each includes at least two rows of battery cells, and one of the pressure relief sub-cavities communicates with the openings of ones, which are provided in one row of the at least two rows of battery cells, of the pressure relief valves.

In some embodiments, the at least one rib extends in a direction close to the first gap, and the at least one rib is spaced apart from a corresponding one of the walls of the first grooves which are each provided with the first gap.

In some embodiments, the bottom plate is concavely formed with the at least one rib in a direction toward the accommodating cavity.

In some embodiments, the sealing plate and the bottom plate are fixed by friction stir welding.

In some embodiments, the side wall plate is provided with one or more explosion-proof valves, the battery pack further includes a baffle plate, the baffle plate, the one side wall plate and the bottom plate enclose to form an air flow channel, and the air flow channel communicates with the one or more explosion-proof valves and the first pressure relief channel.

In some embodiments, the baffle plate is welded to the side wall plate.

In some embodiments, a third groove is provided in the surface of the bottom plate which faces towards the accommodating cavity, and the third groove is located at ends of the first grooves which are way from the second groove;

a second pressure relief channel is provided between the sealing plate and the third groove, and the second pressure relief channel communicates with the pressure relief cavity and the air flow channel.

In some embodiments, the battery pack further includes a flame retardant layer disposed between the sealing plate and the sub-modules, wherein the flame retardant layer covers the plurality of through holes.

In some embodiments, a thickness of the flame retardant layer is less than a thickness of the sealing plate.

Advantageous effects of embodiments of the application are as follows.

According to the present application, the battery pack specifically includes a housing and a battery module. A housing includes a bottom plate and a side wall plate connected to peripheral sides of the bottom plate, in which the bottom plate and the side wall plate are enclosed to form an accommodating cavity, and a surface of the bottom plate which faces towards the accommodating cavity forms a plurality of first grooves independently arranged. A battery module is located at the accommodating cavity, in which the battery module includes a plurality of sub-modules, a pressure relief cavity is formed between a bottom surface of each of the plurality of sub-modules and a corresponding one of the plurality of first grooves, the sub-modules each include battery cells, bottom surfaces of the battery cells are arranged with respective pressure relief valves, and openings of the pressure relief valves communicate with the pressure relief cavity.

In this way, in the present application, the first grooves are independently arranged and formed directly on the bottom plate of the housing, so that the pressure relief cavity formed between the bottom surface of each sub-module and the corresponding first groove is relatively independent. Further, the openings of the pressure relief valves of the plurality of sub-modules communicate with respective pressure relief cavities, thus when the battery cell of one of the sub-modules occurs the thermal runaway, the flame and the high-temperature gas can be effectively prevented from spreading to the battery cells of the other sub-modules. So, it can improve the technical problem of generating the chain thermal runaway when the single one battery cell of the battery pack occurs the thermal runaway, and thus the use safety of the whole battery pack can be enhanced.

### BRIEF DESCRIPTION OF THE DRAWINGS

In order that the technical solution in the embodiments of the present application may be more clearly described, reference will now be made briefly to the accompanying drawings required for the description of the embodiments. It will be apparent that the accompanying drawings in the description below are merely some of the embodiments of the present application, and other drawings may be made to those skilled in the art without involving any inventive effort.
FIG. 1 is a perspective view of a battery pack according to embodiments of the present application;
FIG. 2 is an exploded schematic view of a battery pack according to embodiments of the present application;
FIG. 3 is a schematic sectional view of a battery pack according to embodiments of the present application;
FIG. 4 is a schematic view of an enlarged structure at part A in FIG. 3;
FIG. 5 is another schematic sectional view of a battery pack according to embodiments of the present application;
FIG. 6 is a perspective structural diagram of a housing of a battery pack according to embodiments of the present application;
FIG. 7 is a schematic top view of the housing of the battery pack according to embodiments of the present application;
FIG. 8 is a schematic view of an assembly structure of a baffle plate of a battery pack according to embodiments of the present application;
FIG. 9 is a schematic view of an enlarged structure at part B in FIG. 8; and
FIG. 10 is a schematic view of an assembly structure of a flame retardant layer of a battery pack according to embodiments of the present application.

List of reference numbers: battery pack 100, housing 10, bottom plate 11, first groove 111, first gap 1111, second gap 1112, second groove 112, third groove 113, rib 114, side wall plate 12, explosion-proof valve 121, partition beam 13, reinforcing beam 14, accommodating cavity 10a, battery module 20, sub-module 21, battery cell 211, pressure relief valve 2111, bracket 212, sealing plate 30, through hole 31, flame retardant layer 40, baffle plate 50, air flow channel 50a, pressure relief cavity 60, pressure relief sub-cavity 61, first pressure relief channel 70, and second pressure relief channel 80.

### DETAILED DESCRIPTION

Technical solutions in embodiments of the present disclosure will be clearly and completely described below in conjunction with accompanying drawings in the embodiments of the present disclosure. Apparently, the described embodiments are merely some of the embodiments of the present disclosure, not all of them. Based on the embodiments in the present disclosure, all other embodiments obtained by those skilled in the art without making creative efforts fall within a scope of protection of the present disclosure. Moreover, it should be understood that the specific embodiments described here are only used to describe and explain the present disclosure, and are not used to limit the present disclosure. In the present application, without any explanation to the contrary, directional terms used herein such as "upper" and "lower" usually refer to the upper and lower positions of a device in an actual use or working state, specifically the direction of the figures of the accompanying drawings, and terms "inner" and "outer" refer to a profile of the device.

According to embodiments of the present application, it is provided a battery pack 100. Detailed descriptions are given below. It should be noted that the order in which the following examples are described is not intended to limit the preferred order of the examples.

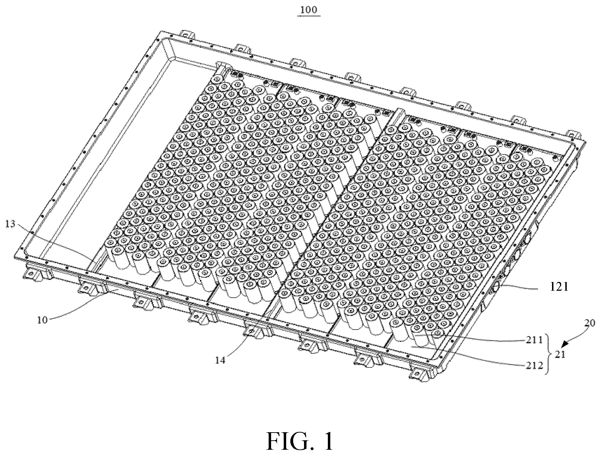

Referring to FIGS. 1-4, according to embodiments of the present application, it is provided a battery pack 100 including a housing 10 and a battery module 20. A housing 10 includes a bottom plate 11 and a side wall plate 12 connected to peripheral sides of the bottom plate 11. The bottom plate 11 and the side wall plate 12 are enclosed to form an accommodating cavity 10a. A surface of the bottom plate 11 which faces towards the accommodating cavity 10a forms a plurality of first grooves 111 independently arranged. A battery module 20 is located at the accommodating cavity 10a. The battery module 20 includes a plurality of sub-modules 21. A pressure relief cavity 60 is formed between a bottom surface of each of the plurality of sub-modules21 and a corresponding one of the plurality of first grooves 111. The sub-modules 21 each include battery cells 211. Bottom surfaces of the battery cells 211 are arranged with respective pressure relief valves 2111, and openings of the pressure relief valves 211 communicate with the pressure relief cavity 60.

In the present application, the first grooves 111 are independently arranged and formed directly on the bottom plate of the housing, so that the pressure relief cavity formed between the bottom surface of each sub-module 21 and the corresponding first groove 111 is relatively independent. Further, the openings of the pressure relief valves 2111 of the plurality of sub-modules 21 communicate with respective pressure relief cavities 2111, thus when the battery cell 211 of one of the sub-modules 21 occurs the thermal runaway, the flame and the high-temperature gas can be effectively prevented from spreading to the battery cells 211 of the other sub-modules 21. So, it can improve the technical problem of generating the chain thermal runaway when the single one battery cell 211 of the battery pack 100 occurs the thermal runaway, and thus the use safety of the whole battery pack can be enhanced.

In this case, the bottom plate 11 and the side wall plate 12 of the housing 10 may be integrated to ensure the stability of the housing 10 in terms of carrying the battery module 20. At the same time, the housing 10 may further include a cover plate. The bottom plate 11 is located at the bottom of the side wall plate 12. The cover plate is connected to the top of the side wall plate 12 so as to cover the accommodating cavity 10a, so as to protect the battery module 20. The housing 10 may be made of a high-temperature-resistant material such as steel sheet metal, thereby further improving the fire resistance of the housing 10. The first groove 111 may be formed in the surface, which faces towards the accommodating cavity 10a, of the bottom plate 11 by means of stamping. The battery module 20 includes a plurality of sub-modules 21. The sub-modules 21 may be connected in parallel or in series so that the battery pack 100 meets requirements for the rated voltage and the rated current.

In addition, the housing 10 includes a partition beam 13 and a reinforcing beam 14. The partition beam 13 is connected to opposite surfaces of the side wall plate 12 which faces towards the accommodating cavity 10a. By providing the partition beam 13, the accommodating cavity 10a of the housing 10 can be divided into two accommodating cavities. One accommodating cavity is used for accommodating the battery module 20. The other accommodating cavity is used for accommodating other elements in the battery assembly, such as a battery management system and a battery thermal management system. The partition beam 13 may be of a hollow structure. The heat in the two accommodating cavities is prevented from spreading to the other by providing the partition beam 13 as a hollow structure.

The reinforcing beam 14 may be fixed to the opposite surfaces of the side wall plate 12 which faces towards the accommodating cavity 10a by welding or the like. The reinforcing beam 14 and the battery module 20 are located in the same accommodating cavity. By providing the reinforcing beam 14, not only the stability of the housing 10 for carrying the battery pack 20 is improved, but also the stability of the overall structure of the battery pack 100 can be improved when the battery pack 211 occurs the thermal runaway to relieve the pressure.

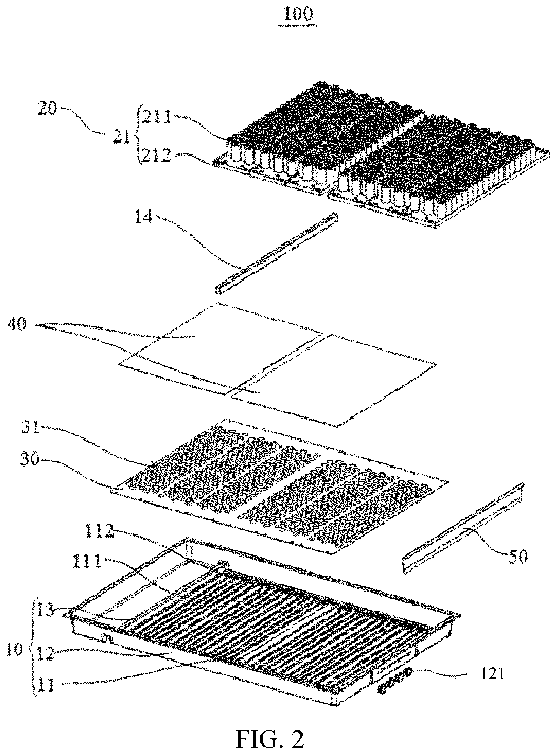

Referring to FIGS. 2 to 4, alternatively, the battery pack 100 further includes a sealing plate 30 disposed in the accommodating cavity 10a. The sealing plate 30 is between the bottom surface of the plurality of sub-modules 21 and the bottom plate 11, and covers the notches of the plurality of first grooves 111. The sealing plate 30 is provided with a plurality of through holes 31 each corresponding to a respective one of the openings of the pressure relief valves 2111 of the battery cells 211. The plurality of through holes 31 extends through the sealing plate 30.

By providing the sealing plate 30 to cover the notches of the first grooves 111, the separation effect of the plurality of pressure relief cavities 60 is further improved, so as to further play a role of preventing the flame from spreading to the other sub-modules 21. The sealing plate 30 is provided with through holes 31 corresponding to the opening of the respective pressure relief valve 2111, so that when the battery cell 211 occurs the thermal runaway, the flame is directly ejected from the openings of the pressure relief valves 2111 and directly enters the pressure relief cavity 60 from the through holes 31, thereby preventing the flame from spreading to other positions on the bottom surface of the battery cell 211. The sealing plate 30 may be made of a high-temperature-resistant material such as steel sheet metal, thereby further improving the fire resistance of the sealing plate 30. It should be noted that the shape of the through hole 31 can be adapted to the shape of the pressure relief valve 2111. For example, when the shape of the pressure relief valve 2111 is circular, the shape of the through hole 31 may also be provided to be circular. A pore size of the through hole 31 may be greater than or equal to a pore size of the opening of the pressure relief valve 2111 so that the high-temperature gas and the flame may be unhindered into the pressure relief cavity 60.

Alternatively, the sealing plate 30 and the bottom plate 11 are fixed by friction stir welding. In this case, the sealing plate 30 may be fixed to the bottom plate 11 by friction stir welding, which can not only reduce the deformation of the housing 10 due to the connection, but also prevent the assembly from being affected by slag accumulation.

In addition, the sub-module 21 further includes a bracket 212. The bracket 212 is attached to the sealing plate 30 by means of a detachable connection such as a screw, and is provided with a bearing portion matched with a outer shape of the battery cell 211. The battery cell 211 is provided in the bearing portion. The bearing portion is provided with a through hole communicating with the opening of the pressure relief valve 2111. The material of the bracket 212 may be plastic or may be made of other flame retardant materials.

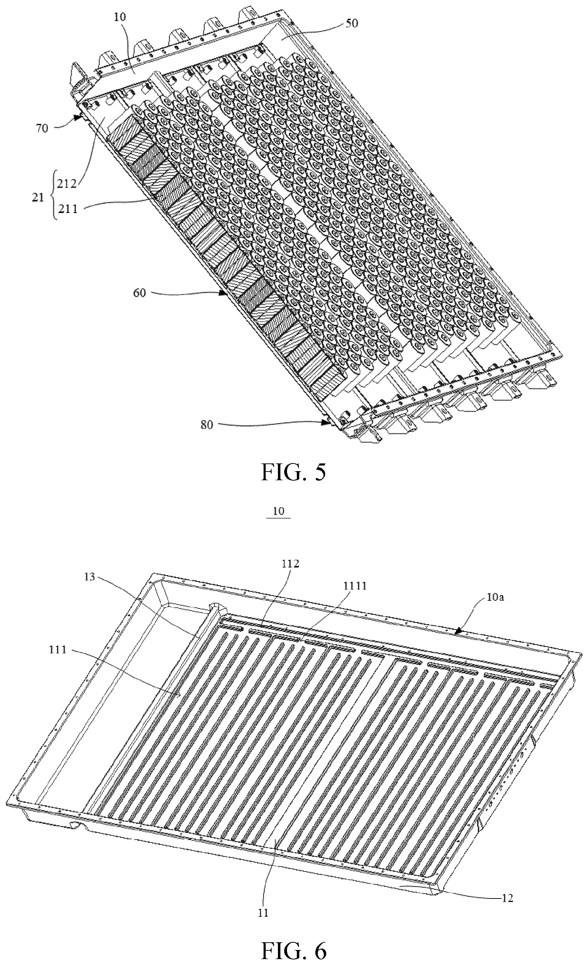

Referring to FIGS. 5 to 7, alternatively, a second groove 112 is formed in the surface, which faces towards the accommodating cavity 10a, of the bottom plate 11. A first pressure relief channel 70 is formed between the sealing plate 30 and the second groove 112. The wall, which is close to the second groove 112, of the first groove 111 is provided with a first gap 1111. The first pressure relief channel 70 communicates with the pressure relief cavity 60 through the first gap 1111. Thus, the second groove 112 is formed in the bottom plate 11, and the first pressure relief channel 70 is formed by enabling the second groove 112 in cooperation with the sealing plate 30. In this way, when the battery cell 211 of one of the sub-modules 21 occurs the thermal runaway, the high-temperature gas discharged from the pressure relief valve 2111 enters the corresponding pressure relief cavity 60. Thereafter, the first pressure relief channel 70 communicates with the pressure relief cavity 60 so that the high-temperature gas can be introduced into the first pressure relief channel 70 to discharge the exhaust gas and relieve the pressure inside the pressure relief cavity 60. In this way, continuous accumulation of the high-temperature gas can be avoided, thereby effectively reducing occurrence of severe combustion and explosion. It should be noted that the second groove 112 may be formed like the first groove 111 by stamping.

Further, the plurality of first grooves 111 are arranged at intervals in the same direction. The second grooves 112 are located at the same end portions of the plurality of first grooves 111. The plurality of first grooves 111 may be arranged at intervals in a direction parallel to one side of the bottom plate 11, so that the plurality of sub-modules 21 are correspondingly arranged at intervals in this same direction, thereby facilitating the installation of the plurality of sub-modules 21. The second groove 112 is positioned at the same end of the first grooves 111 so that the flow of the high-temperature gas in each of the pressure relief cavities 60 flows into the first pressure relief channel 70 along the same path, thereby ensuring that the pressure relief cavities 60 have the same pressure relief efficiencies. It should be noted that, in other embodiments, the plurality of first grooves 111 may also be arranged in an array and symmetrically distributed on opposite sides of the second groove 112. In this way, the plurality of sub-modules 21 are installed in a relatively centralized manner, so that the overall volume of the battery pack 100 can be effectively reduced.

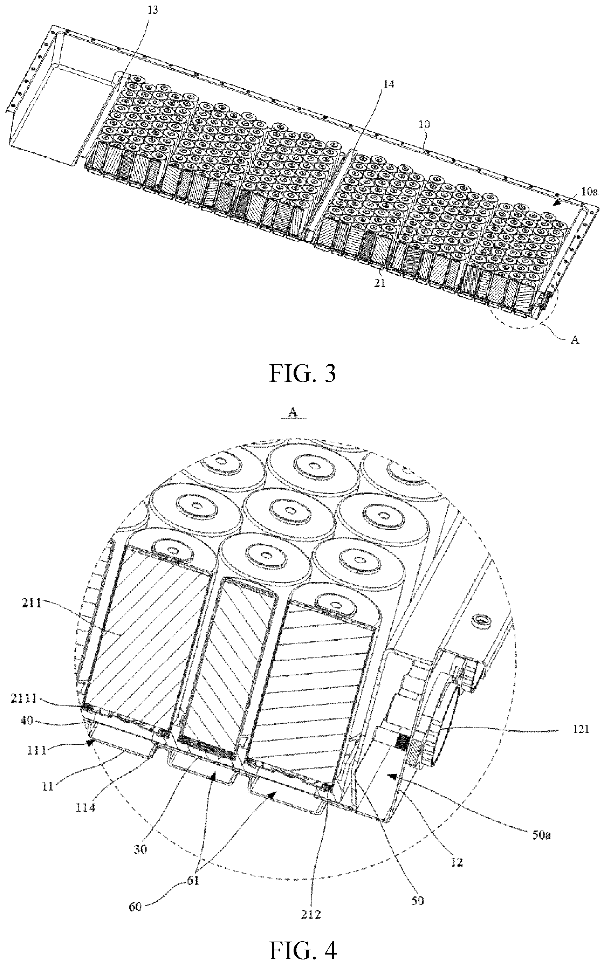

Referring to FIGS. 4, 6 and 7, the bottom plate 11 is optionally provided with at least one rib 114 at the bottom of the first groove 111. The end surface of the rib 114 which is away from the bottom of the first groove abuts against the sealing plate 30. The rib(s) 114 divide the pressure relief cavity 60 into a plurality of pressure relief sub-cavities 61. The pressure relief sub-cavities 61 communicate with the first pressure relief channel 70. The sub-modules 21 each include at least two rows of battery cells 211. One of the pressure relief sub-cavities 61 communicates with openings of the pressure relief valves of one row of battery cells 211.

With the above arrangement, the rib 114 can be used not only to support the sealing plate 30, but also to separate the pressure relief cavity 60 to form a plurality of pressure relief sub-cavities 61. So, the pressure relief sub-cavities 61 with smaller spaces can be formed to be separately and correspondingly arranged with a row of battery cells 211 in the same sub-module 21, respectively. In this way, when the one battery cell 211 in the sub-module 21 occurs the thermal runaway, the spread of flame to the other rows of battery cells 211 can be effectively reduced, and the other rows of battery cells 211 can be prevented from being ignited, thereby reducing the burning intensity and shortening the burning time. In the present embodiments, the number of ribs 114 is four, so that the pressure relief cavity 60 is divided into five separate pressure relief sub-cavities 61. The sub-modules include five rows of battery cells 211. One row of battery cells 211 is provided corresponding to the pressure relief sub-cavity 61. The number of the ribs 114 may be set according to the need of the battery cells 211 of the sub-module 21, and the number of the ribs 114 is not limited in the present application.

Alternatively, the bottom plate 11 is recessed in a direction toward the accommodating cavity 10a to form the rib(s) 114. The rib(s) 114 may be stamped by the base plate 11 to ensure the strength and the stability of the rib 114.

Further, the ribs 114 extend in a direction close to the first gap 1111. The ribs 114 are spaced apart from the wall, which is provided with the first gap 1111, of the first groove 111. In this manner, the ribs 114 extend in the direction toward the first gap 1111, so that when the thermal runaway occurs in the battery cell 211 of the one row of the sub-modules 21, the high-temperature gas in the corresponding pressure relief sub-cavity 61 can flow toward the first gap 1111 directionally, and then flow into the first pressure relief channel 70 to improve the pressure relief efficiency.

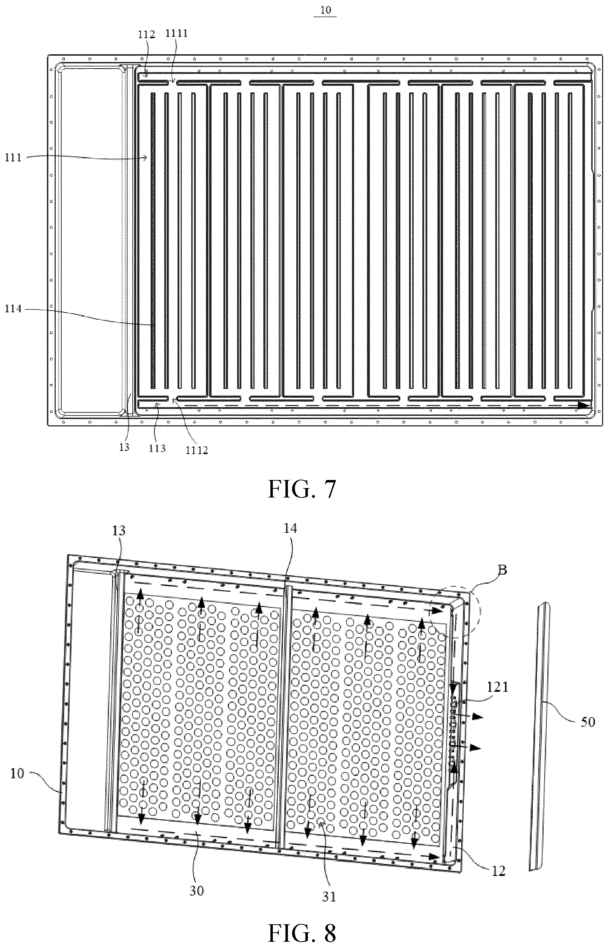

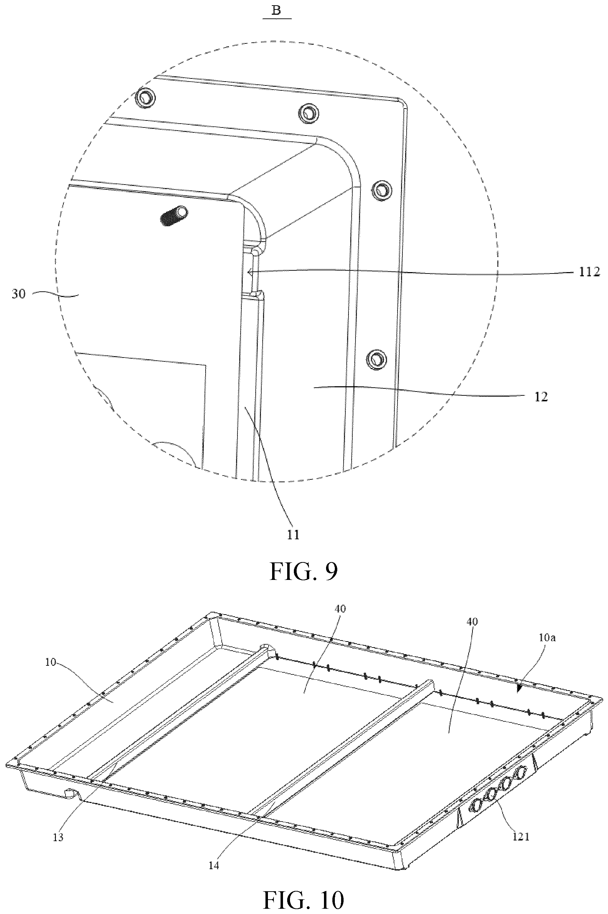

Alternatively, referring to FIGS. 8 and 9, the side wall plate 12 is provided with explosion-proof valve(s) 121. The battery pack 100 further includes a baffle plate 50. An air flow channel 50a is formed among the baffle plate 50, the side wall plate 12, and the bottom plate 11. The air flow channel 50a communicates with the explosion-proof valve(s) 121 and the first pressure relief channel 70.

Here, the sealing plate 30 may expose a notch of a portion of the second groove 112. Then, an airflow channel 50a is formed by the side wall plate 12, the bottom plate 11 and the flow guide plate 50, so that the notch of the exposed second groove 112 communicates with the airflow passage 50a. In this way, after the high-temperature gas resulted from the thermal runaway flows from the pressure relief channel 60 to the first pressure relief channel 70, the high-temperature gas can flow along the first pressure relief channel 70 to the gas flow channel 50a, and flow along the gas flow channel 50a to the explosion-proof valve(s) 121 on the side wall plate 12. When the pressure in the gas flow channel 50a reaches the start-up pressure value of the explosion-proof valve(s) 121, the gas is discharged through the explosion-proof valve(s) 121, thereby preventing the battery pack 100 from expanding and exploding, and improving the safety performance of the battery pack 100. The number of the explosion-proof valve(s) 121 may be multiple explosion-proof valves to further improve the pressure relief efficiency. As shown by the arrows in FIG. 8, the arrows show the flow direction of the high-temperature gas. After the high-temperature gas reaches the first pressure relief channel 70 from the pressure relief groove (i.e., first groove 111), the high-temperature gas continues to reach the gas flow channel 50a along the first pressure relief channel 70, and then flows to the position of the pressure relief valve 2111 through the gas flow passage 50a.

Alternatively, the baffle plate 50 is welded to the side wall plate 12. The baffle plate 50 may be connected to the side wall plate 12 by welding or the like, so as to improve the stability of the baffle plate 50 after installation and further improve the effect of sealing the air flow channel 50a.

It should be noted that, in other embodiments, the explosion-proof valve(s) 121 may be provided directly on the bottom plate 11, which communicates with the second groove 112. So, the high-temperature gas can be discharged to the outside through the explosion-proof valve(s) 121 more quickly after flowing into the second groove 112.

With reference to FIGS. 7 to 9, further, a third groove 113 is formed in the surface of the bottom plate 11 which faces towards the accommodating cavity 10a. The third groove 113 is located at the ends of the first grooves 111 which are away from the second groove 112 and extends to the side wall plate 12. A second pressure relief channel 80 is formed between the sealing plate 30 and the third groove 113, and communicates with the pressure relief cavities 60 and the air flow channel 50a.

The third groove 113 and the second groove 112 are symmetrically arranged at opposite ends of the first grooves 111. A wall, which is away from the second groove 112, of the first groove 111 is provided with a second gap 1112 communicating with the third groove 113. A second pressure relief channel 80 is formed between the sealing plate 30 and the third groove 113, and communicates with the pressure relief cavities 60. Here, the sealing plate 30 may expose a notch of a portion of the third groove 113. Then, an airflow channel 50a is formed by the side wall plate 12, the bottom plate 11 and the flow guide plate 50, so that the notch of the exposed second groove 113 communicates with the airflow passage 50a. In this manner, when one battery cell 211 occurs the thermal runaway, the high-temperature gas in the pressure relief cavity 60 can be guided to the first pressure relief channel 70 and the second pressure relief channel 80, respectively, so as to improve the exhaust pressure relief efficiency of the pressure relief cavity 60, and further avoid continuous accumulation of the high-temperature gas, thereby effectively reducing occurrence of severe combustion and explosion.

Referring to FIGS. 2 and 10, the battery pack 100 further includes a flame retardant layer 40 disposed between the sealing plate 30 and the sub-modules 21. The flame retardant layer 40 covers the plurality of through holes 31.

Here, the flame-retardant layer 40 is provided so that when the high-temperature gas and the flame in the pressure relief valve 2111 of the battery cell 211 are discharged outwardly, the high-temperature gas and the flame can be discharged through the flame-retardant layer 40 and then enter the corresponding first groove 111 through the through holes 31. The pressure relief valve 2111 of the adjacent battery cell 211, which does not occur the thermal runaway, is blocked from the first groove 111 by the flame retardant layer 40. In this way, the other battery cells 211 may not be affected by the high-temperature gas and the flame, thereby avoiding the technical problem of generating the chain thermal runaway. It should be noted that the flame retardant layer 40 may be formed by splicing a plurality of flame retardant sub-layers. That is, one flame retardant sub-layer may be provided corresponding to one or more sub-modules 21, so that a single damaged flame retardant sub-layer may be subsequently replaced. Further, the material of the flame retardant layer 40 is mica. The flame retardant layer 40 that is made of mica ensures fire resistance while effectively avoiding the thicker thickness of the flame retardant layer 40. Of course, the material of the flame retardant layer 40 may also be other materials having a flame retardant effect. The material selection of the flame retardant layer 40 may be determined according to the UL94-V0 flame retardant grade, which is not limited herein.

Further, the thickness of the flame retardant layer 40 is less than the thickness of the sealing plate 30. The sealing plate 30 is of a flat plate structure. The thickness of the flame retardant layer 40 and the thickness of the sealing plate 30 refer to dimensions perpendicular to the direction of the flat surface of the sealing plate 30. By making the thickness of the flame retardant layer 40 less than that of the sealing plate 30, the thickness of the flame retardant layer 40 covering the through holes 31 is not too thick to be difficult to be punched by the high-temperature gas and the flame.

Embodiments of the present application have been described in detail, and specific examples have been used herein to illustrate the principles and embodiments of the application. The above description of the embodiments is merely used to help understand the methods and core ideas of the present application. Meanwhile, for those skilled in the art, there may be changes in the specific implementation methods and application scope based on the ideas of the present application. In summary, the content of the specification should not be understood as a limitation of the present application.

## Claims

1. A battery pack (100), comprising:
a housing (10) comprising a bottom plate (11) and a side wall plate (12) connected to peripheral sides of the bottom plate, wherein the bottom plate and the side wall plate are enclosed to form an accommodating cavity (10a), and a surface of the bottom plate which faces towards the accommodating cavity forms a plurality of first grooves (111) independently arranged; and
a battery module (20) located at the accommodating cavity, wherein the battery module comprises a plurality of sub-modules (21), a pressure relief cavity (60) is provided between a bottom surface of each of the plurality of sub-modules and a corresponding one of the plurality of first grooves, the sub-modules each comprise battery cells (211), bottom surfaces of the battery cells are provided with respective pressure relief valves (2111), and openings of the pressure relief valves communicate with the pressure relief cavity.

2. The battery pack according to claim 1, further comprising a sealing plate (30) disposed in the accommodating cavity, wherein the sealing plate is located between the bottom surface of each of the plurality of sub-modules and the bottom plate, and the sealing plate covers notches of the plurality of the first grooves;
the sealing plate is provided with a plurality of through holes (31) each corresponding to a respective one of the openings of the pressure relief valves of the battery cells, and the plurality of through holes extends through the sealing plate.

3. The battery pack according to claim 2, wherein the surface of the bottom plate which faces towards the accommodating cavity is further provided with a second groove (112), a first pressure relief channel (70) is provided between the sealing plate and the second groove, walls of the first grooves which are adjacent to the second groove are each provided with a first gap (1111), and the first pressure relief channel communicates with the pressure relief cavity through the first gap.

4. The battery pack according to claim 3, wherein the plurality of the first grooves are arranged at intervals in a same direction, and the second groove is located at same end portions of the plurality of the first grooves.

5. The battery pack according to claim 3 or 4, wherein the bottom plate is provided with at least one rib (114) at a bottom of each of the first grooves, an end face of the at least one rib which is away from the bottom of the first groove abuts against the sealing plate, the at least one rib devides the pressure relief cavity to form a plurality of pressure relief sub-cavities (61), and the pressure relief sub-cavities communicate with the first pressure relief channel;
the sub-modules each comprises at least two rows of battery cells, and the openings of the pressure relief valves of each row of the at least two rows of battery cells communicate with a corresponding one of the plurality of pressure relief sub-cavities.

6. The battery pack according to claim 5, wherein the at least one rib extends in a direction close to the first gap, and the at least one rib is spaced apart from a corresponding one of the walls of the first grooves which are each provided with the first gap.

7. The battery pack according to claim 5, wherein the bottom plate is concavely formed with the at least one rib in a direction toward the accommodating cavity.

8. The battery pack according to any one of claims 2 to 7, wherein the sealing plate and the bottom plate are fixed by friction stir welding.

9. The battery pack according to any one of claims 3 to 8, wherein the side wall plate is provided with one or more explosion-proof valves (121), the battery pack further comprises a baffle plate (50), the baffle plate, the one side wall plate and the bottom plate enclose to form an air flow channel (50a), and the air flow channel communicates with the one or more explosion-proof valves and the first pressure relief channel.

10. The battery pack according to claim 9, wherein the baffle plate is welded to the side wall plate.

11. The battery pack according to claim 9 or 10, wherein a third groove (113) is provided in the surface of the bottom plate which faces towards the accommodating cavity, and the third groove is located at ends of the first grooves which are way from the second groove;
a second pressure relief channel (80) is provided between the sealing plate and the third groove, and the second pressure relief channel communicates with the pressure relief cavity and the air flow channel.

12. The battery pack according to any one of claims 2 to 11, further comprising a flame retardant layer (40) disposed between the sealing plate and the sub-modules, wherein the flame retardant layer covers the plurality of through holes.

13. The battery pack according to claim 12, wherein a thickness of the flame retardant layer is less than a thickness of the sealing plate.
